# FASCICULE DE BREVET EUROPEEN

(11) **EP 2 697 038 B1**
(45) Date de publication et mention de la délivrance du brevet: **19.09.2018**
(21) Numéro de dépôt: 12722758.5
(22) Date de dépôt: 10.04.2012
(51) Int. Cl.: B29C 70/32, B29C 53/58, B29C 53/80, B29C 53/56, B65H 23/032, B65H 18/10

(54) **MACHINE D'ENROULEMENT D'UNE TEXTURE FIBREUSE SUR UN MANDRIN D'IMPREGNATION ET UTILISATION D'UNE TELLE MACHINE POUR LA REALISATION D'UN CARTER DE TURBINE A GAZ EN MATERIAU COMPOSITE**
MASCHINE ZUM WICKELN EINES FASERIGER TEXTUR AUF EINEN IMPRÄGNIERUNGSDORN UND VERWENDUNG EINER SOLCHEN MASCHINE ZUR HERSTELLUNG EINES GASTURBINENGEHÄUSES AUS VERBUNDWERKSTOFF
MACHINE FOR WINDING A FIBROUS TEXTURE ONTO AN IMPREGNATION MANDREL AND USE OF SUCH A MACHINE FOR PRODUCING A GAS TURBINE CASING MADE OF A COMPOSITE MATERIAL

(30) Priorité: 13.04.2011 FR 1153212
(43) Date de publication de la demande: 19.02.2014
(73) Titulaire: Safran Aircraft Engines, 75015 Paris (FR)
(72) Inventeur: MATHON, Richard, New Castle, Delaware 03854 (US); PHELIPPEAU, Antoine, Portsmouth, New Hampshire 03801 (US); GUMMEL, Micah, East Kingston, New Hampshire 03827 (US); DURAND, Jean-François, 12160 Baraqueville (FR)
(74) Mandataire: Boura, Olivier
(86) Numéro de dépôt international: PCT/FR2012/050769
(87) Numéro de publication internationale: WO 2012/140355

(56) Documents cités:
- WO-A1-96/19335
- FR-A1- 2 656 826
- JP-A- 2009 293 164
- US-A- 3 300 355
- US-A- 5 876 544
- US-A1- 2009 098 337

## Description

### Arrière-plan de l'invention

La présente invention se rapporte au domaine général de la réalisation de carters de turbine à gaz en matériau composite, et plus particulièrement de carters de rétention pour soufflante de turbine à gaz pour moteurs aéronautiques.

Dans un moteur aéronautique à turbine à gaz, un carter de soufflante remplit plusieurs fonctions : il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

De façon courante, un carter de rétention de soufflante est formé par une paroi relativement mince définissant la veine d'entrée d'air et supportant un matériau abradable au droit de la trajectoire des sommets des aubes de soufflante et le revêtement de traitement acoustique éventuel, et par une structure de bouclier fixé sur cette paroi du côté extérieur, au niveau de la soufflante.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation dont le profil correspond à celui du carter à fabriquer. La préforme fibreuse ainsi obtenue est maintenue sur le mandrin d'imprégnation et une imprégnation par résine est réalisée avant polymérisation.

En pratique, la mise en oeuvre de ce procédé pose le problème du transfert de la texture fibreuse depuis le mandrin d'appel vers le mandrin d'imprégnation. En particulier, préalablement à son enroulement, il est nécessaire d'assurer un parfait placement de la texture fibreuse sur le mandrin d'imprégnation. En outre, au cours de l'opération d'enroulement, la tension appliquée à la texture fibreuse doit être constamment maîtrisée. En effet, cette tension conditionne le niveau de compactage des couches de texture fibreuse superposées sur le mandrin d'imprégnation, et donc le taux de fibres de la préforme fibreuse obtenue.

Par conséquent, un besoin existe de disposer d'une machine d'enroulement permettant d'assurer, lors du transfert de la texture fibreuse depuis le mandrin d'appel vers le mandrin d'imprégnation, à la fois un placement correct de la texture fibreuse sur le mandrin d'imprégnation et l'application d'une tension d'enroulement adéquate.

FR 2,656,826 décrit une machine d'enroulement selon le préambule de la revendication 1. Des machines d'enroulement d'une texture fibreuse selon l'état de la technique sont également décrites dans les documents WO 96/19335, US 2009/098337 et JP 2009/293164.

### Objet et résumé de l'invention

La présente invention a donc pour but principal de pallier un tel besoin en proposant une machine d'enroulement d'une texture fibreuse sur un mandrin d'imprégnation, selon la revendication 1.

La machine d'enroulement est également remarquable en ce qu'elle présente une unité de commande du ou des moteurs électriques d'entraînement en rotation des mandrins. Par ce contrôle du ou des moteurs, il est en effet possible de contrôler la tension d'enroulement appliquée à la texture fibreuse lors de son enroulement sur le mandrin d'imprégnation. Par le contrôle de cette tension d'enroulement, et en fonction de la nature de la texture fibreuse, le taux de fibres de la préforme obtenue peut donc être déterminé et maîtrisé.

Il en résulte une machine d'enroulement parfaitement adaptée à la réalisation de carters de rétention de soufflante en matériau composite pour moteur aéronautique. En particulier, le fonctionnement de cette machine peut être entièrement automatisé, ce qui contribue à diminuer le temps de cycle de fabrication de ces carters.

L'unité de commande des moteurs électriques de la machine d'enroulement comprend des moyens de contrôle du courant d'induction d'un moteur électrique du mandrin d'appel en vue d'enrouler la texture fibreuse sur le mandrin d'imprégnation en exerçant sur celle-ci une tension maîtrisée.

De préférence également, la machine d'enroulement comprend en outre des moyens de visée optique pour aligner le mandrin d'appel sur le mandrin d'imprégnation préalablement à l'enroulement de la texture fibreuse sur le mandrin d'imprégnation et pour corriger un défaut d'alignement du mandrin d'appel sur le mandrin d'imprégnation au cours de ladite opération d'enroulement.

Ces moyens de visée optique de la machine d'enroulement peuvent comprendre un système de visée optique monté sur un portique à la verticale des mandrins, un repère visuel positionné sur le mandrin d'imprégnation, et un système de translation du mandrin d'appel.

La machine d'enroulement peut comprendre en outre un mandrin supplémentaire sur lequel est destiné à être stocké un tissu fibreux de renfort, le mandrin supplémentaire ayant un axe de rotation sensiblement horizontal et parallèle aux axes de rotation respectifs des mandrins, et un moteur électrique pour entraîner en rotation le mandrin supplémentaire autour de son axe de rotation.

La machine d'enroulement peut comprendre encore des moyens de chauffage de la texture fibreuse préalablement à son accostage sur le mandrin d'imprégnation. Le chauffage de la texture fibreuse avant son accostage sur le mandrin d'imprégnation permet de faciliter sa mise en forme et son compactage sur ce mandrin. Avantageusement, ces moyens de chauffage de la texture fibreuse comprennent des unités de chauffage par rayonnement ou soufflage d'air chaud positionnées sur le trajet de la texture fibreuse entre le mandrin d'appel et le mandrin d'imprégnation et en regard de chaque face de celle-ci.

De même, la machine d'enroulement peut comprendre des moyens de pulvérisation d'eau sur la texture fibreuse préalablement à son accostage sur le mandrin d'imprégnation. La pulvérisation d'eau sur la texture fibreuse préalablement à son accostage sur le mandrin d'imprégnation permet également de faciliter sa mise en forme sur ce mandrin et augmente considérablement son compactage lors de l'enroulement. Avantageusement, ces moyens de pulvérisation d'eau sur la texture fibreuse comprennent une rampe portant une pluralité de buses de pulvérisation d'eau positionnées à la verticale du mandrin d'appel.

L'invention concerne également l'utilisation d'une machine d'enroulement telle que définie précédemment pour la réalisation d'un carter de turbine à gaz en matériau composite, conformément à la revendication 9.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en perspective d'une machine d'enroulement selon l'invention ;
- les figures 2 et 3 sont des vues de la machine d'enroulement de la figure 1, respectivement de côté et de dessus ;
- les figures 4A et 4B montrent de façon schématique comment la texture fibreuse stockée sur le mandrin d'appel de la machine d'enroulement est placée sur le mandrin d'imprégnation préalablement à son enroulement ;
- la figure 5 est une vue en perspective de la machine d'enroulement des figures 1 à 3 en cours de fonctionnement ;
- la figure 6 est une vue schématique de côté d'une machine d'enroulement selon une variante de réalisation de l'invention ;
- la figure 7 est une vue schématique de côté d'une machine d'enroulement selon une autre variante de réalisation de l'invention ; et
- les figures 8A et 8B sont des vues schématiques d'une machine d'enroulement selon encore une autre variante de réalisation de l'invention.

### Description détaillée de modes de réalisation

L'invention sera décrite ci-après dans le cadre de son application à la fabrication d'un carter de soufflante de moteur aéronautique à turbine à gaz.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

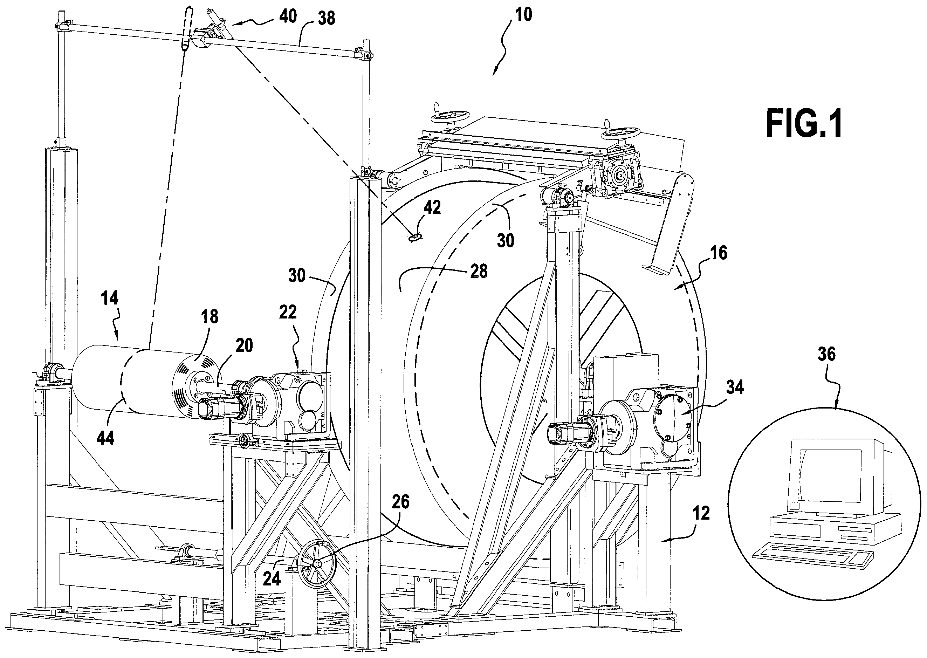

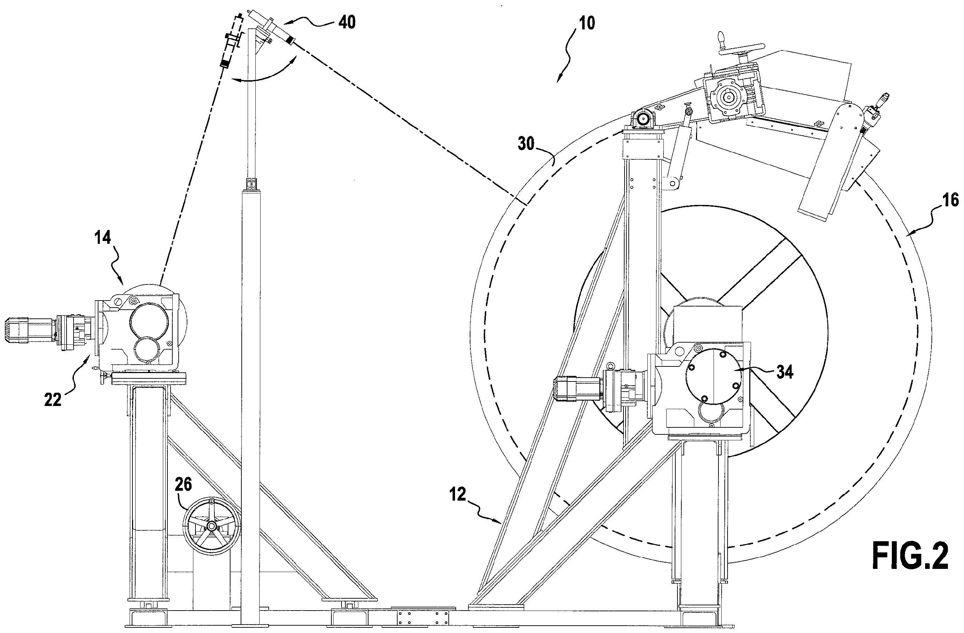

La machine d'enroulement représentée sur les figures 1 à 3 et objet de la présente invention a pour fonction, lors du procédé de fabrication du carter, de permettre un transfert automatisé de la texture fibreuse stockée sur le mandrin d'appel vers le mandrin d'imprégnation du moule d'injection de résine.

Il est à noter que cette machine d'enroulement ne s'applique pas qu'aux textures fibreuses obtenues exclusivement par tissage tridimensionnel comme celle décrite ci-après.

La machine d'enroulement 10 selon l'invention comprend un bâti 12 supportant notamment un mandrin d'appel 14 et un mandrin d'imprégnation 16. Ces mandrins sont amovibles, c'est-à-dire qu'ils peuvent être démontés du bâti.

Le mandrin d'appel 14 reçoit la texture fibreuse 18 obtenue par tissage tridimensionnel. Il est porté par un axe 20, par exemple horizontal, dont une extrémité est montée de façon rotative sur le bâti 12 de la machine d'enroulement et l'autre extrémité est couplée à l'arbre de sortie d'un moteur électrique 22, par exemple un motoréducteur électrique à courant alternatif.

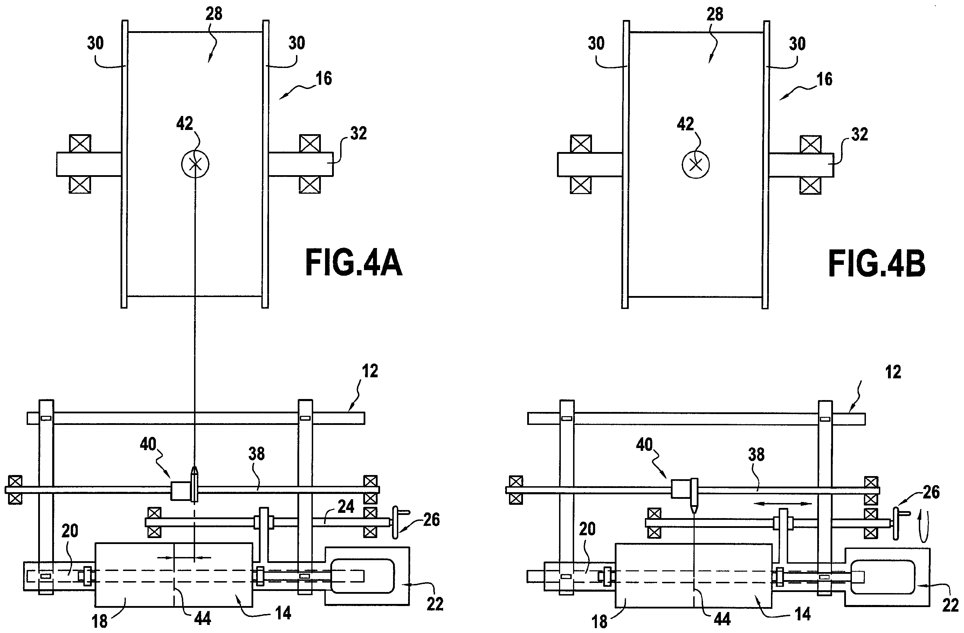

L'ensemble constitué du mandrin d'appel 14, de son axe 20 et de son moteur électrique 22 peuvent translater par rapport au bâti le long de l'axe de rotation du mandrin d'appel. Comme décrit ultérieurement en liaison avec les figures 4A et 4B, ce degré de liberté en translation du mandrin d'appel permet de réaliser un alignement de ce mandrin sur le mandrin d'imprégnation préalablement à l'enroulement de la texture fibreuse sur le mandrin d'imprégnation.

Le système permettant d'assurer un déplacement en translation du mandrin d'appel est par exemple formé d'une tige 24 de type vis sans fin couplée au mandrin d'appel et dont une extrémité est fixée sur le bâti 12 de la machine d'enroulement et l'autre extrémité est équipée d'une manivelle 26. La rotation de la tige sous l'actionnement de la manivelle provoque ainsi une translation de l'ensemble constitué du mandrin d'appel 14, de son axe 20 et de son moteur électrique 22 par rapport au bâti.

Bien entendu, l'actionnement de la manivelle 26 permettant de provoquer une translation du mandrin d'appel le long de son axe de rotation pourra être exercé manuellement ou être motorisé.

Le mandrin d'imprégnation 16 de la machine d'enroulement selon l'invention est destiné à recevoir en couches superposées la texture fibreuse stockée sur le mandrin d'appel. Il présente une surface extérieure 28 dont le profil correspond à celui de la surface interne du carter à réaliser et deux flasques latéraux 30.

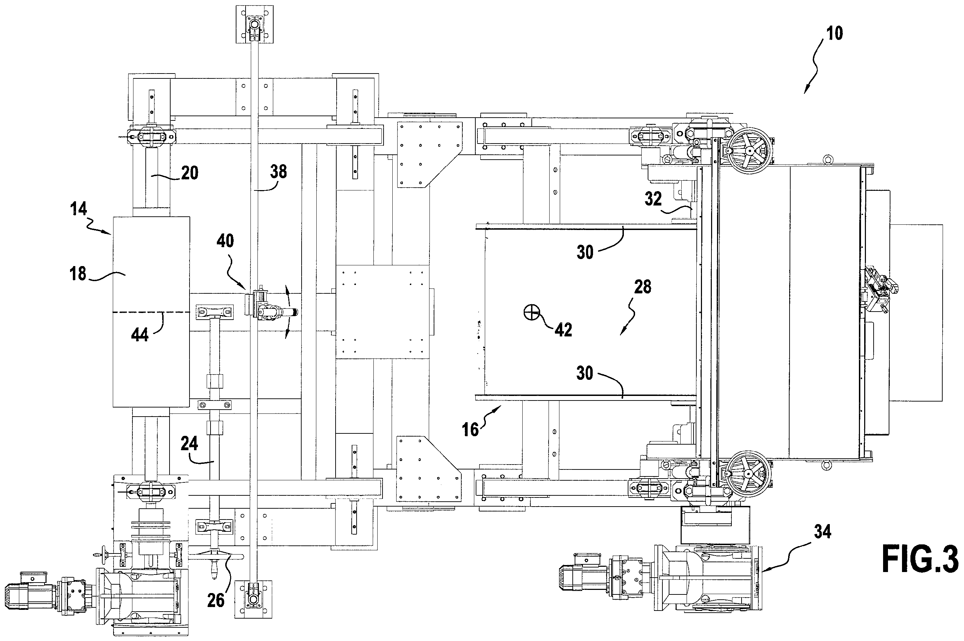

Le mandrin d'imprégnation est porté par un axe 32, par exemple horizontal (figure 3), qui est parallèle à l'axe de rotation 20 du mandrin d'appel et dont l'une extrémité est montée de façon rotative sur le bâti 12 de la machine d'enroulement et l'autre extrémité est couplée à l'arbre de sortie d'un moteur électrique 34, par exemple un motoréducteur électrique à courant alternatif.

Une unité de commande 36 est reliée aux moteurs électriques 22, 34 des deux mandrins et permet de commander et contrôler de la vitesse de rotation de chaque mandrin. De manière plus générale, cette unité de commande permet de piloter l'ensemble des paramètres de fonctionnement de la machine d'enroulement, et notamment le déplacement en translation du mandrin d'appel lorsque celui-ci est motorisé.

On notera que la machine d'enroulement pourra comporter un seul moteur électrique pour l'entraînement en rotation des deux mandrins, ce moteur électrique étant piloté par l'unité de commande précédemment décrite. A cet effet, une courroie crantée permettra de gérer la tension d'enroulement et de revenir en arrière si besoin. De plus, un rouleau intermédiaire permettra de faire varier la tension d'enroulement.

La machine d'enroulement 10 comprend également un portique 38 sur lequel sont montés à la verticale des mandrins des moyens de visée optique permettant d'aligner le mandrin d'appel sur le mandrin d'imprégnation préalablement à l'enroulement de la texture fibreuse sur le mandrin d'imprégnation.

Plus précisément, un système de visée optique 40 (par exemple un laser émettant un faisceau lumineux) est monté pivotant sur le portique à la verticale des mandrins. Comme représenté sur la figure 1, ce système de visée optique peut pivoter autour du portique 38 sur lequel il est monté de sorte à pouvoir viser l'un ou l'autre des mandrins de la machine d'enroulement. Bien entendu, on pourrait envisager un système de visée optique dont l'angle de projection permet de couvrir les deux mandrins. Le système de visée optique possède également un degré de liberté latéral lui permettant de viser n'importe quel point sur toute la largeur de la surface extérieure 28 du mandrin d'imprégnation (figure 3).

Le mandrin d'appel 14 est aligné sur le mandrin d'imprégnation 16 préalablement à l'enroulement de la texture fibreuse de la manière suivante.

Dans un premier temps, un repère visuel 42 est positionné sur la surface extérieure 28 du mandrin d'imprégnation et le système de visée optique 40 est actionné et déplacé latéralement de façon à aligner son faisceau sur ce repère visuel (figure 4A). Le système de visée optique est alors verrouillé latéralement dans cette position et pivoté autour du portique 38 pour venir à la verticale du mandrin d'appel. Dans cette position, le système de visée optique vise la texture fibreuse 18 enroulée sur le mandrin d'appel 14.

Pour que le mandrin d'appel soit correctement aligné sur le mandrin d'imprégnation, il est nécessaire qu'un fil de chaîne particulier 44 de la texture fibreuse (appelé fil traceur) dont la position dans la texture fibreuse est corrélée à la position du repère visuel du mandrin d'imprégnation soit aligné sur le faisceau lumineux émis par le système de visée optique. A cet effet, comme représenté sur la figure 4B, le mandrin d'appel est translaté le long de son axe de rotation par actionnement de la manivelle 26 jusqu'à ce que le faisceau lumineux émis par le système de visée optique soit aligné sur le fil traceur 44. Une fois le mandrin d'appel correctement aligné sur le mandrin d'imprégnation, l'enroulement de la texture fibreuse sur le mandrin d'imprégnation peut alors débuter. L'extrémité libre de la texture fibreuse du mandrin d'appel est d'abord fixée sur le mandrin d'imprégnation, puis les moteurs d'entraînement en rotation des mandrins sont activés et pilotés comme décrit ultérieurement.

De façon avantageuse, il est prévu de corriger automatiquement tout défaut d'alignement du mandrin d'appel sur le mandrin d'imprégnation survenant au cours de l'opération d'enroulement de la texture fibreuse sur le mandrin d'imprégnation.

A cet effet, une caméra pourra être montée sur le portique 38 à la verticale des mandrins et dirigée vers la texture fibreuse 18 enroulée sur le mandrin d'appel. Cette caméra sera reliée à l'unité de commande 36 de la machine d'enroulement qui traitera les images numériques provenant de la caméra au cours de l'opération d'enroulement de la texture fibreuse. Un logiciel de traitement d'images équipant l'unité de commande analysera en continu et en temps réel les images de la texture fibreuse : en cas de détection d'un écart entre le faisceau lumineux émis par le système de visée optique 40 et le fil traceur 44 intégré dans la texture fibreuse, l'unité de commande 36 commandera un déplacement en translation du mandrin d'appel pour corriger cet écart. Bien entendu, ce mode opératoire nécessite le recours à un moteur électrique pour assurer la rotation de la tige permettant de déplacer en translation le mandrin d'appel le long de son axe de rotation.

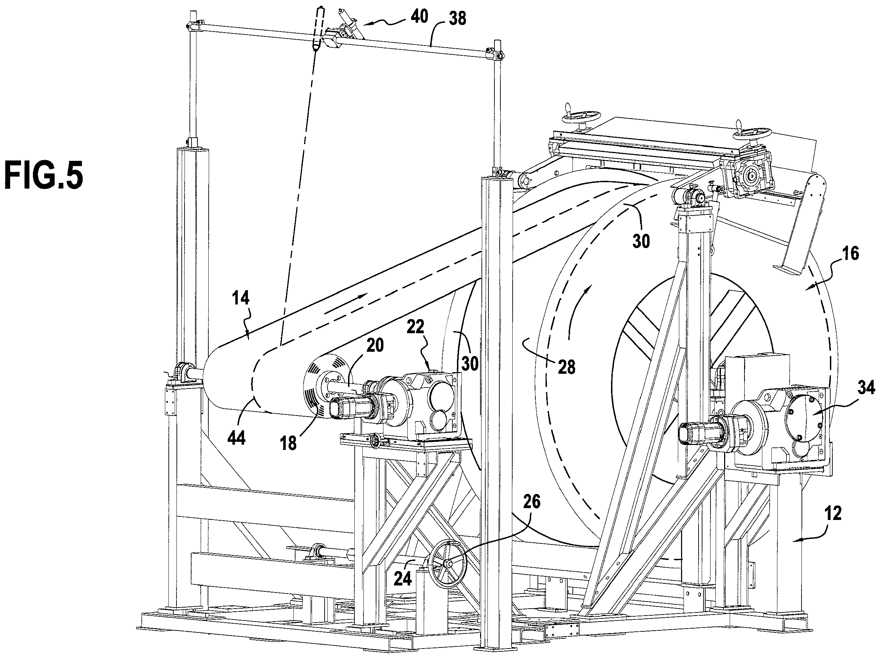

En liaison avec la figure 5, on décrira maintenant comment est enroulée la texture fibreuse sur le mandrin d'imprégnation. Comme indiqué précédemment, une fois l'extrémité libre de la texture fibreuse fixée sur le mandrin d'imprégnation, les moteurs électriques d'entraînement en rotation du mandrin d'appel et du mandrin d'imprégnation sont activés et pilotés par l'unité de commande.

Conformément à l'invention, l'enroulement de la texture fibreuse en couches superposées sur le mandrin d'imprégnation doit se faire en appliquant une tension d'enroulement adéquate sur la texture fibreuse.

A cet effet, une tension de consigne est prédéfinie en fonction notamment de la nature de la structure fibreuse et est appliquée au mandrin qui offre le couple résistant à l'enroulement, à savoir généralement le mandrin d'appel. Plus précisément, la tension de consigne est entrée dans l'unité de commande qui la traduit en une valeur de consigne pour le courant d'induction du moteur électrique du mandrin d'appel au moyen d'un algorithme de calcul adéquat.

Cet algorithme de calcul permettant d'associer à une valeur de tension de consigne une valeur de courant d'induction du moteur électrique du mandrin d'appel (lorsque celui-ci est résistant) est préalablement élaboré en prenant notamment en compte le rayon moyen de ce mandrin. L'algorithme peut être réévalué si besoin lorsque des écarts apparaissent entre la tension de consigne et une tension réelle mesurée lors des opérations de maintenance à l'aide d'un dynamomètre relié par des sangles au mandrin d'appel et au mandrin d'imprégnation.

Il est à noter que la tension de consigne varie en fonction notamment de la nature de fibres constituant la texture fibreuse à enrouler sur le mandrin d'imprégnation et des paramètres utilisés pour son tissage.

A titre d'exemple, pour une texture fibreuse constituée d'un tissu multicouche tridimensionnel de type Interlock en fibres de carbone à module intermédiaire, on appliquera une tension de consigne comprise entre 6000 N et 15000 N avec une vitesse de défilement du tissu lors de son enroulement comprise entre 200 et 400 mm/min. De telles valeurs permettent d'obtenir, pour la texture fibreuse particulière, un niveau adéquat de compactage des couches de texture fibreuse superposées sur le mandrin d'imprégnation. Il en résulte un taux de fibres de la préforme fibreuse obtenue à l'issue de l'étape ultérieure d'imprégnation par résine qui est maîtrisé.

Il est également à noter que le processus d'enroulement de la texture fibreuse sur le mandrin d'imprégnation est réversible, c'est-à-dire qu'il est possible de rembobiner la texture fibreuse sur le mandrin d'appel. Cette opération de rembobinage, qui s'effectue sous contrôle de la vitesse et de la tension d'enroulement, peut être utilisée en cas de détection tardive d'un défaut de tissage ou en cas de désalignement lors de l'enroulement sur le mandrin d'imprégnation en reprenant l'opération à un stade antérieur.

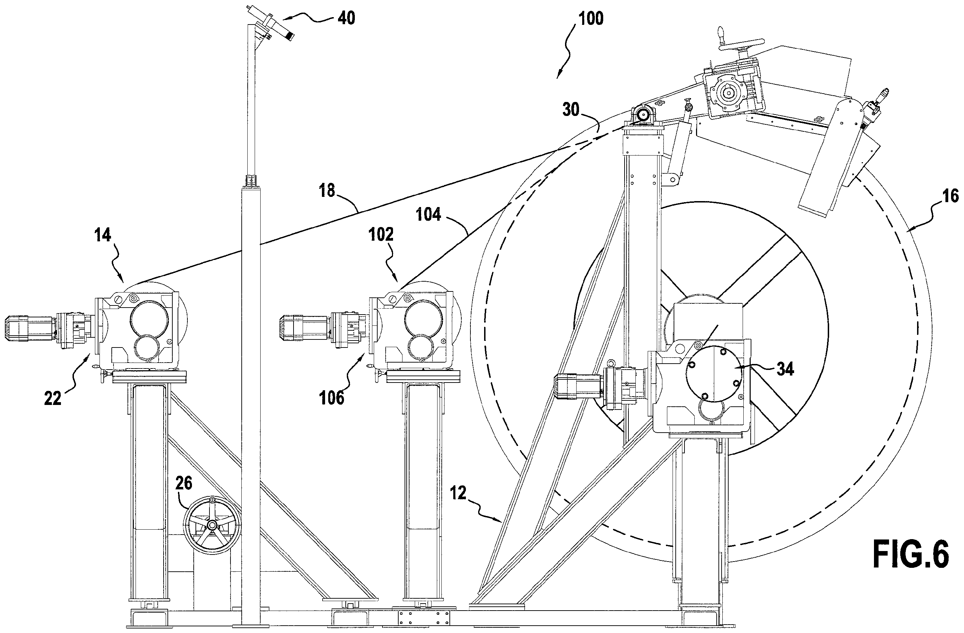

En liaison avec les figures 6, 7, 8A et 8B, on décrira maintenant différentes variantes de réalisation de la machine d'enroulement selon l'invention. Dans ces variantes, les machines d'enroulement présentent les mêmes caractéristiques que celles précédemment décrites.

La machine d'enroulement 100 représentée sur la figure 6 possède en outre un mandrin supplémentaire 102 sur lequel est stocké un tissu fibreux de renfort 104. A titre d'exemple, ce tissu de renfort peut être un tissu multicouche tridimensionnel de type Interlock en fibres de carbone à module intermédiaire ou tout autre renfort fibreux tissé, tressé ou unidirectionnel.

Ce mandrin supplémentaire 102 est porté par un axe horizontal (non visible sur la figure 6) qui est parallèle aux axes de rotation respectifs des mandrins d'appel 14 et d'imprégnation 16. Cet axe horizontal possède une extrémité qui est montée de façon rotative sur le bâti 12 de la machine d'enroulement et une autre extrémité qui est couplée à l'arbre de sortie d'un moteur électrique 106, par exemple un motoréducteur électrique à courant alternatif, commandé par l'unité de commande précédemment décrite (et non représentée sur la figure 6).

Le processus d'enroulement du tissu fibreux de renfort sur le mandrin d'imprégnation est en tout point identique à celui décrit pour l'enroulement de la texture fibreuse sur ce même mandrin. En particulier, l'unité de commande permet de commander la vitesse de rotation du mandrin supplémentaire et, au moyen d'un contrôle du courant d'induction du moteur électrique du mandrin d'appel, il est possible de contrôler la tension d'enroulement appliquée au tissu de renfort tout au long de son enroulement.

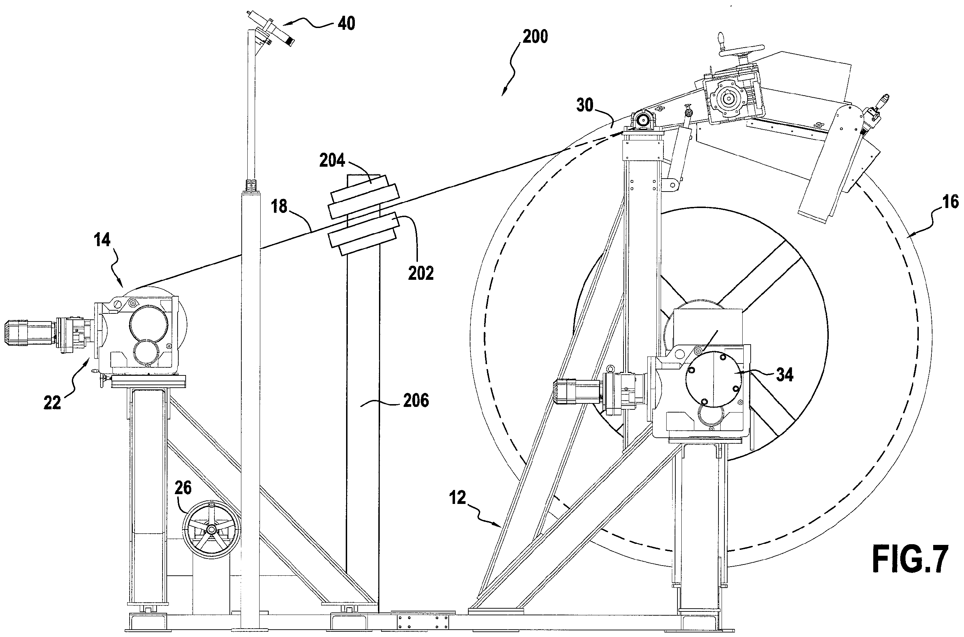

La machine d'enroulement 200 représentée sur la figure 7 possède des moyens de chauffage de la texture fibreuse préalablement à son accostage sur le mandrin d'imprégnation. Il est en effet connu que le chauffage de la texture fibreuse préalablement à son accostage sur le mandrin d'imprégnation permet de faciliter sa mise en forme et son compactage sur ce mandrin.

Ainsi, il est prévu dans cette variante de réalisation deux unités de chauffage 202, 204 (par rayonnement ou soufflage d'air chaud par exemple) qui sont montées sur un portique 206 solidaire du bâti 12 de la machine d'enroulement et positionnées sur le trajet de la texture fibreuse 18 entre le mandrin d'appel 14 et le mandrin d'imprégnation 16. Ces unités de chauffage sont plus précisément disposées en regard de chaque face de la texture fibreuse.

Par ailleurs, le pilotage de ces unités de chauffage 202, 204 est assuré par l'unité de commande précédemment décrite. Typiquement, la température de chauffage est réglable dans une gamme comprise entre 40°C et 90°C. Les unités de chauffage sont régulées pour s'adapter automatiquement à la vitesse d'enroulement, même en cas d'arrêt de celui-ci, afin de maintenir la texture fibreuse à la température souhaitée.

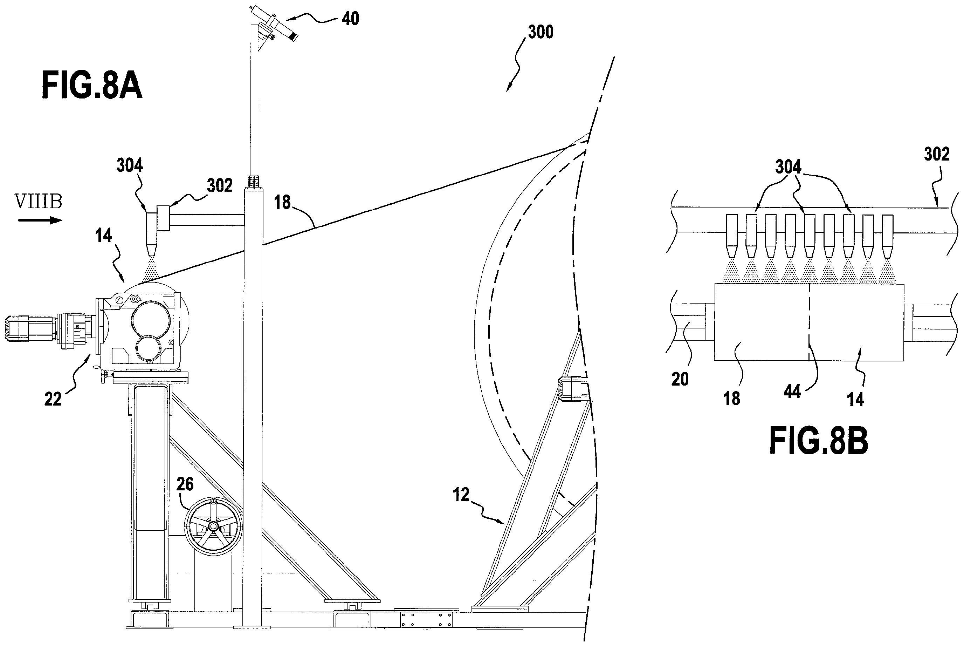

Enfin, la machine d'enroulement 300 de la variante de réalisation des figures 8A et 8B possède des moyens de pulvérisation d'eau sur la texture fibreuse préalablement à son accostage sur le mandrin d'imprégnation. De même que le chauffage, la pulvérisation d'eau sur la texture fibreuse préalablement à son accostage sur le mandrin d'imprégnation permet également de faciliter sa mise en forme sur ce mandrin en l'assouplissant par le biais du glissement des fibres entre elles.

Dans cette variante de réalisation, il est ainsi prévu une rampe 302 montée sur le bâti 12 de la machine d'enroulement et portant une pluralité de buses 304 de pulvérisation d'eau (par exemple d'eau déminéralisée) positionnées à la verticale du mandrin d'appel 14, en regard de la texture fibreuse 18 enroulée sur celui-ci. Ces buses sont réparties sur toute la largeur du mandrin d'appel afin de permettre une humidification de la texture fibreuse sur toute sa largeur.

Par ailleurs, le débit d'eau pulvérisée par ces buses peut être réglé manuellement ou piloté par l'unité de commande précédemment décrite, par exemple en s'adaptant automatiquement à la vitesse d'enroulement de la texture fibreuse sur le mandrin d'imprégnation afin d'assurer un niveau d'humidification constant de la texture fibreuse quelque soit la vitesse d'enroulement.

## Revendications

1. Machine d'enroulement (10 ; 100 ; 200 ; 300) d'une texture fibreuse sur un mandrin d'imprégnation, comprenant :
un mandrin d'appel (14) sur lequel est destinée à être stockée une texture fibreuse (18), le mandrin d'appel ayant un axe de rotation (20) ;
un mandrin d'imprégnation (16) sur lequel est destinée à être enroulée en couches superposées la texture fibreuse stockée sur le mandrin d'appel, le mandrin d'imprégnation ayant un axe de rotation (32) sensiblement parallèle à l'axe de rotation du mandrin d'appel ;
deux moteurs électriques (22, 34) ou un moteur électrique (22, 34) associé à une courroie crantée et à un rouleau intermédiaire pour entraîner en rotation les mandrins autour de leur axe de rotation respectif ; et
une unité de commande (36) du ou des moteurs électriques d'entraînement en rotation des mandrins,
**caractérisée en ce que** l'unité de commande du ou des moteurs électriques comprend des moyens de contrôle du courant d'induction d'un moteur électrique du mandrin d'appel en vue d'enrouler la texture fibreuse sur le mandrin d'imprégnation en exerçant sur celle-ci une tension maîtrisée,
le courant d'induction du mandrin d'appel étant basé sur une tension de consigne de la texture fibreuse et un algorithme de calcul qui associe à une valeur de tension de consigne une valeur de courant d'induction du moteur électrique du mandrin d'appel,
la tension de consigne de la texture fibreuse étant prédéfinie en fonction de la nature des fibres constituant la texture fibreuse et des paramètres utilisés durant l'enroulement de la texture fibreuse, et la valeur du courant d'induction du mandrin d'appel dépendant du rayon moyen du mandrin d'appel.

2. Machine selon la revendication 1, comprenant en outre des moyens de visée optique (40) pour aligner le mandrin d'appel sur le mandrin d'imprégnation préalablement à l'enroulement de la texture fibreuse sur le mandrin d'imprégnation et pour corriger un défaut d'alignement du mandrin d'appel sur le mandrin d'imprégnation au cours de ladite opération d'enroulement.

3. Machine selon la revendication 2, dans laquelle les moyens de visée optique comprennent un système de visée optique monté sur un portique (38) à la verticale des mandrins, un repère visuel positionné sur le mandrin d'imprégnation, et un système de translation (24, 26) du mandrin d'appel.

4. Machine (100) selon l'une quelconque des revendications 1 à 3, comprenant en outre :
un mandrin supplémentaire (102) sur lequel est destiné à être stocké un tissu fibreux de renfort (104), le mandrin supplémentaire ayant un axe de rotation sensiblement horizontal et parallèle aux axes de rotation respectifs des mandrins ; et
un moteur électrique (106) pour entraîner en rotation le mandrin supplémentaire autour de son axe de rotation.

5. Machine (200) selon l'une quelconque des revendications 1 à 4, comprenant en outre des moyens (202, 204) de chauffage de la texture fibreuse préalablement à son accostage sur le mandrin d'imprégnation.

6. Machine selon la revendication 5, dans laquelle les moyens de chauffage de la texture fibreuse comprennent des unités de chauffage par rayonnement ou soufflage d'air chaud positionnées sur le trajet de la texture fibreuse entre le mandrin d'appel et le mandrin d'imprégnation et en regard de chaque face de celle-ci.

7. Machine (300) selon l'une quelconque des revendications 1 à 6, comprenant en outre des moyens (304) de pulvérisation d'eau sur la texture fibreuse préalablement à son accostage sur le mandrin d'imprégnation.

8. Machine selon la revendication 7, dans laquelle les moyens de pulvérisation d'eau sur la texture fibreuse comprennent une rampe (302) portant une pluralité de buses de pulvérisation d'eau (304) positionnées à la verticale du mandrin d'appel.

9. Utilisation d'une machine d'enroulement selon l'une quelconque des revendications 1 à 8 pour la réalisation d'un carter de turbine à gaz en matériau composite.

## Patentansprüche

1. Maschine zum Aufwickeln (10; 100; 200; 300) einer Faserstruktur auf einen Imprägnierdorn, umfassend:
einen Bereitstellungsdorn (14), auf dem eine Faserstruktur (18) gelagert werden soll, wobei der Bereitstellungsdorn eine Rotationsachse (20) umfasst,
einen Imprägnierdorn (16), auf den die Faserstruktur, welche auf dem Bereitstellungsdorn gelagert ist, in übereinander angeordneten Lagen gewickelt werden soll, wobei der Imprägnierdorn eine Rotationsachse (32) aufweist, die zu der Rotationsachse des Bereitstellungsdorns im Wesentlichen parallel verläuft,
zwei Elektromotoren (22, 34) oder einen Elektromotor (22, 34), der einem Zahnriemen und einer Zwischenrolle zugeordnet ist, um die Dorne um ihre jeweilige Rotationsachse drehend anzutreiben, und
eine Einheit zur Betätigung (36) des oder der Elektromotoren zum Drehantreiben der Dorne,
**dadurch gekennzeichnet, dass** die Einheit zur Betätigung des oder der Elektromotoren Mittel zum Steuern des Induktionsstromes eines Elektromotors des Bereitstellungsdorns umfasst, um unter Ausüben einer kontrollierten Spannung auf die Faserstruktur diese auf den Imprägnierdorn zu wickeln,
wobei der Induktionsstrom des Bereitstellungsdorns auf einer Sollspannung der Faserstruktur und einem Berechnungsalgorithmus basiert, der einem Sollspannungswert einen Induktionsstromwert des Elektromotors des Bereitstellungsdorns zuordnet,
wobei die Sollspannung der Faserstruktur in Abhängigkeit von der Art der Fasern, die die Faserstruktur bilden, und den während des Aufwickelns der Faserstruktur verwendeten Parametern vordefiniert ist, und wobei der Wert des Induktionsstromes des Bereitstellungsdorns von dem durchschnittlichen Radius des Bereitstellungsdorns abhängt.

2. Maschine nach Anspruch 1, ferner umfassend optische Zielmittel (40), um vor dem Aufwickeln der Faserstruktur auf den Imprägnierdorn den Bereitstellungsdorn auf den Imprägnierdorn auszurichten und um einen Fehler beim Ausrichten des Bereitstellungsdorns auf den Imprägnierdorn im Laufe des Wickelvorgangs zu korrigieren.

3. Maschine nach Anspruch 2, bei der die optischen Zielmittel ein optisches Zielsystem, das an einem Rahmen (38) senkrecht zu den Dornen angebracht ist, eine Sichtmarkierung, die an dem Imprägnierdorn positioniert ist, und ein System zum Verschieben (24, 26) des Bereitstellungsdorns umfassen.

4. Maschine (100) nach einem der Ansprüche 1 bis 3, ferner umfassend:
einen zusätzlichen Dorn (102), auf dem ein Verstärkungsfasergewebe (104) gelagert werden soll, wobei der zusätzliche Dorn eine Rotationsachse aufweist, die zu den jeweiligen Rotationsachsen der Dorne im Wesentlichen horizontal und parallel verläuft, und
einen Elektromotor (106), um den zusätzlichen Dorn um seine Rotationsachse drehend anzutreiben.

5. Maschine (100) nach einem der Ansprüche 1 bis 4, die ferner Mittel (202, 204) zum Erhitzen der Faserstruktur vor ihrem Anlegen an den Imprägnierdorn umfasst.

6. Maschine nach Anspruch 5, bei der die Mittel zum Erhitzen der Faserstruktur Einheiten zum Erhitzen durch Strahlung oder Heißluftblasen umfassen, die auf dem Weg der Faserstruktur zwischen dem Bereitstellungsdorn und dem Imprägnierdorn sowie gegenüber einer jeden ihrer Seiten positioniert sind.

7. Maschine (300) nach einem der Ansprüche 1 bis 6, die ferner Mittel (304) zum Spritzen von Wasser auf die Faserstruktur vor ihrem Anlegen an den Imprägnierdorn umfasst.

8. Maschine nach Anspruch 7, bei der die Mittel zum Spritzen von Wasser auf die Faserstruktur ein Gestänge (302) umfassen, das eine Vielzahl von Wasserspritzdüsen (304) trägt, welche senkrecht zu dem Bereitstellungsdorn positioniert sind.

9. Verwendung einer Wickelmaschine nach einem der Ansprüche 1 bis 8 für die Herstellung eines Gasturbinengehäuses aus Verbundwerkstoff.

## Claims

1. A winding machine (10; 100; 200; 300) for winding a fiber texture on an impregnation mandrel, the machine comprising:
a takeup mandrel (14) for storing a fiber texture (18), the takeup mandrel having an axis of rotation (20);
an impregnation mandrel (16) for having superposed layers of the fiber texture stored on the takeup mandrel wound thereon, the impregnation mandrel having an axis of rotation (32) that is substantially parallel to the axis of rotation of the takeup mandrel;
two electric motors (22, 34) or a single electric motor (22, 34) associated with a cog belt for driving the mandrels in rotation about their respective axes of rotation; and
a control unit (36) for controlling the electric motor(s) for driving the mandrels in rotation, the machine being **characterized in that** the control unit for controlling the electric motor(s) comprises means for controlling the induction current of an electric motor of the takeup mandrel in order to wind the fiber texture onto the impregnation mandrel while exerting controlled tension thereon.

2. A machine according to claim 1, further comprising optical sighting means (40) for aligning the takeup mandrel on the impregnation mandrel prior to winding the fiber texture onto the impregnation mandrel and for correcting any defect in the alignment of the takeup mandrel on the impregnation mandrel during said winding operation.

3. A machine according to claim 2, wherein the optical sighting means comprise an optical sighting system mounted on a cross-beam (38) vertically above the mandrels, a visual marker positioned on the impregnation mandrel, and a system (24, 26) for moving the takeup mandrel in translation.

4. A machine (100) according to any one of claims 1 to 3, further comprising:
an additional mandrel (102) for storing a reinforcing fiber fabric (104), the additional mandrel having an axis of rotation that is substantially horizontal and parallel to the respective axes of rotation of the mandrels; and
an electric motor (106) for driving rotation of the additional mandrel about its axis of rotation.

5. A machine (200) according to any one of claims 1 to 4, further comprising heater means (202, 204) for heating the fiber texture prior to the texture docking on the impregnation mandrel.

6. A machine according to claim 5, wherein the fiber texture heater means comprise radiant heater units or hot air blower units positioned on the path of the fiber texture between the takeup mandrel and the impregnation mandrel and facing each of the faces of the texture.

7. A machine (300) according to any one of claims 1 to 6, further comprising water spray means (304) for spraying water on the fiber texture prior to the texture docking on the impregnation mandrel.

8. A machine according to claim 7, wherein the water spray means for spraying water on the fiber texture comprise a strip (302) carrying a plurality of water spray nozzles (304) positioned vertically above the takeup mandrel.

9. The use of a winding machine according to any one of claims 1 to 8 for making a gas turbine casing out of composite material.
